Europäisches Patentamt

European Patent Office

Office européen des brevets

(11) Veröffentlichungsnummer: **0 234 559**
**A2**

## (12) EUROPÄISCHE PATENTANMELDUNG

(21) Anmeldenummer: **87102640.7**

(22) Anmeldetag: **25.02.87**

(51) Int. Cl.⁴: **B26D 7/00**

(30) Priorität: **26.02.86 DE 3606147**

(43) Veröffentlichungstag der Anmeldung:
**02.09.87 Patentblatt 87/36**

(84) Benannte Vertragsstaaten:
**FR GB IT NL**

(71) Anmelder: **IBSM Mehltretter GmbH**
**Westendstrasse 179**
**D-8000 München 21(DE)**

(72) Erfinder: **Blatter, Reinhard**
**Guardinistrasse 109**
**D-8000 München 70(DE)**
Erfinder: **Dohnalek, Heinz**
**Perhamerstrasse 68**
**D-8000 München 21(DE)**
Erfinder: **Mehltretter, Michael J.**
**Kagerbauerstrasse 52**
**D-8023 Pullach(DE)**

(54) **Vorrichtung zur Aufnahme von scherenartig zusammenwirkenden, kreisförmigen Schneidwerkzeugen.**

(57) Eine Vorrichtung zur Aufnahme von scherenartig zusammenwirkenden, kreisförmigen Schneidwerkzeugen soll unter Berücksichtigung der betrieblichen Gegebenheiten so weiter ausgestaltet werden, daß ein leichter Ein-und Ausbau der Messerwellen - (12,13) möglich ist. Hierzu werden folgende Maßnahmen ergriffen: Der Rahmen (1) besteht aus einem quaderförmigen, in Längsrichtung entlang der Trennlinien (10,11) in zwei Hälften (1',1") zerlegbaren Gestell, die Lagergehäuse (2,3) für die Wellenzapfen (4,4',5,5') der Messerwellen (12,13) sind gemeinsam in rechteckigen Ausnehmungen (8,8') der beiden Seitenwände des quaderförmigen Gestells (1) gelagert, und die hohlen Messerwellen (6,7) weisen an beiden Enden einen Innenkonus (9) zur Aufnahme der in den Lagergehäusen (2,3) gelagerten Wellenzapfen (4,4',5,5') auf.

EP 0 234 559 A2

### Vorrichtung zur Aufnahme von scherenartig zusammenwirkenden, kreisförmigen Schneidwerkzeugen.

Die Erfindung betrifft eine Vorrichtung zur Aufnahme von Schneidwerkzeugen nach dem Oberbegriff des Anspruches 1.

Eine derartige Vorrichtung ist aus der DE-AS 12 45 280 bekannt. Dort sind auf den beiden Hohlwellen die Schneidwerkzeuge einzeln verschiebbar aufgesteckt. Sie werden mittels einer Einrichtung entlang den Wellen verschoben. Die axiale Verstellung der Wellen und damit die der Schneidwerkzeuge zueinander wird durch eine Druckerhöhung in den hohlen Wellen erreicht. Gleichzeitig werden die Schneidwerkzeuge dadurch mit einem Preßsitz auf den Wellen festgelegt. Die Wellen sind beidseitig in Wälzlagern gelagert. Bei dieser Vorrichtung ist das exakte Einstellen der Streifenbreite - schwierig. Die Verwendung von Druckmitteln bis 141 kg/cm² bringt zusätzliche technische Probleme mit sich. Ein Ausbau der Messerwellen bzw. der Schneidwerkzeuge ist umständlich. Eine Verstellung der Eintauchtiefe der Schneidwerkzeuge ineinander ist nicht möglich, so daß auch die Schneidwerkzeuge bestimmte Außendurchmesser aufweisen müssen.

Aus der DE-OS 27 14 325, Figuren 1 und 2, ist eine Vorrichtung zum Trennen von Folien oder Bändern bekannt, bei der die Wellen mit den Schneidscheiben mittels Lagertraversen in rechteckigen Rahmenteilen senkrecht zur Fläche des zu trennenden Bandes geführt und stufenlos zustellbar sind. Außerdem sind beide Schneidwellen über Stellvorrichtungen in Achsrichtung verstellbar. Weitere Einzelheiten der Lagerung sind nicht erwähnt. Es ist jedoch anhand der Figuren darauf zu - schließen, daß es sich dort um Vollwellen handelt, bei denen zum Austausch der Schneidmesser die Lager von den Wellenzapfen abgezogen werden müssen. Ihre Handhabung ist somit schwer und umständlich, und es besteht die Gefahr von Beschädigungen der Lagersitze bzw. der Schneidmesser.

In der DE-AS 22 57 794 ist eine weitere Trennvorrichtung für flächige Bahnen gezeigt, bei der über exzentrische, verdrehbare Lagerbuchsen eine der beiden Messerwellen auf die andere zubewegt werden kann, so daß sich die Schneidblätter im Betrieb überlappen können. Eine axiale Verstellung der Wellen ist nicht vorgesehen, die Lager der Messerwellen sind in einzelnen Bohrungen in den Seitenteilen vorgesehen. Das Austauschen der Messerwellen ist umständlich, der Außendurchmesser muß sich in relativ kleinen Grenzen halten.

Bei den Vorrichtungen mit kreisförmigen, zusammenwirkenden Schneidwerkzeugen tragen die Wellen oft eine Vielzahl von Schneidwerkzeugen. Hierbei sind die Werkzeuge der beiden Wellen verschieden gestaltet. Relativ starren Messern stehen elastischere, dünne Schneidwerkzeuge der anderen Welle gegen-über (US-PS 39 77 285). Da mit derartigen Vorrichtungen eine einwandfreie Schnittkante der schmalen Folienstreifen erreicht werden muß, ist eine genaue Einstellung der Eintauchtiefe und der gegenseitigen axialen Verspannung der beiden Messerwellen notwendig. Die Gefahr einer Beschädigung der Schneidwerkzeuge ist umso größer und ein Auswechseln der Schneidwerkzeuge umso zeitraubender, je mehr solche Schneidwerkzeuge auf einer Welle gelagert sind. Das Gewicht derartiger Wellen ist beträchtlich, zumal wenn an ihnen die beiden Lager angebracht sind. Da zum Schneidwerkzeugwechsel meist die Lager abgezogen werden müssen, werden oft die Lager und Lagerzapfen beschädigt. Ferner sind betriebliche Gegebenheiten zu beachten, da derartige Vorrichtungen zum Trennen von flächigen, dünnen Bahnen oft in sog. Sauberräumen eingesetzt werden, wo jeder unnötige Montage-und Justiervorgang vermieden werden soll.

Der Erfindung liegt daher die Aufgabe zugrunde, eine Vorrichtung gemäß dem Oberbegriff des Anspruches 1 so weiterauszugestalten, daß unter Berücksichtigung der betrieblichen Gegebenheiten ein leichter Aus-und Einbau der Messerwellen mit Kreismessern mit verschiedenen Außendurchmessern und unterschiedlichen geometrischen Formen (Messerausführungen) möglich ist, wobei sichergestellt sein muß, daß nach jedem Austausch der Messerwellen diese wieder exakt den gewünschten Betriebszustand erreichen und die Gefahr der Beschädigung der Bauteile trotz vielmaligen Austausches verringert wird.

Diese Aufgabe wird bei einer gattungsgemäßen Vorrichtung durch die kennzeichnenden Merkmale des Anspruches 1 gelöst.

Durch die Ausbildung des Rahmens als quaderförmiges Gestell wird dieser sehr stabil. Er ist durch das Lösen einiger Schrauben ohne weiteres in zwei Hälften zu zerlegen. Da die Trennung in Längsrichtung des Gestelles erfolgt, werden die beiden seitlichen Ausnehmungen geöffnet, so daß die Lagergehäuse mit den Wellen ohne weiteres entnommen werden können. Die Wellenzapfen sind mit den Hohlwellen jeweils über einen Innenkonus in der Welle verbunden, so daß nach dem Lösen der Konusverbindung die Lagerzapfen mit den Lagergehäusen an Ort und Stelle verbleiben können und eine neu bestückte Messerwelle eingebaut werden kann, während die ausgebaute Welle allein zum Austausch oder Nachschleifen der Schneidwerkzeuge weggebracht wird. Eine Beschädigung der Lagerflächen an der Hohlwelle ist sehr unwahrscheinlich, da diese sich als Innenkonus geschützt im Inneren der Hohlwelle befindet.

Die Unteransprüche enthalten Angaben zur weiteren vorteilhaften Ausgestaltung der Vorrichtung nach Anspruch 1.

Die geschlossene Ober-und Unterseite des quaderförmigen Gestelles versteift dieses zusätzlich. Die Anordnung der Trenn linien in diesen geschlossenen Seiten ermöglicht eine einfache Schraubverbindung dieser Teile, und die Aufteilung in zwei symmetrische Hälften bringt eine Vereinfachung beim Gießen und Bearbeiten dieser beiden Hälften.

Da die Lagergehäuse seitlich an den rechteckigen Ausnehmungen geführt sind, ist das Einsetzen der kompletten Wellen bei geöffnetem Gestell leicht möglich, und es können Schneidwerkzeuge verschiedenen Durchmessers verwendet werden.

Die Lagerung der Wellen vereinfacht sich, wenn die untere Welle nur in axialer Richtung, die obere Welle nur in radialer Richtung, d.h. entlang der seitlichen Führungen, verstellt werden.

Das Verstellen der oberen Welle erfolgt wegen der Federkraft von zwischen den Lagergehäusen angeordneten Druckfedern spielfrei. Ein exaktes Eintauchen der oberen Messerwelle in die untere Messerwelle ist durch eine gleichmäßig auf beide Lagergehäuse der oberen Welle einwirkende Verstellvorrichtung möglich. über ein Null-oder Normalmaß wird zuvor die Parallelität beider Messerwellen sichergestellt.

Eine vereinfachte Herstellung der Einzelteile ergibt sich dadurch, daß der Innenkonus zur Aufnahme der Wellenzapfen in einem Flansch ist, der in die Messerwelle lösbar eingesetzt ist. Die Verbindung des Wellenzapfens mit dem Innenkonus wird über eine Spannschraube gesichert, die mit dem Flansch mit dem Innenkonus zusammenwirkt.

Die Spannschraube reicht durch eine Bohrung in den Wellenzapfen. Ihr Kopf ist in einer Bohrung versenkt. Durch einen Verschlußring wird der Schraubenkopf in dem Wellenzapfen fixiert, und beim Lösen der Schraube stützt sich der Schrauben kopf an dem Verschlußring ab, so daß die Schraube als Druckschraube die Konusverbindung löst.

Da der Außendurchmesser des Flansches mit dem Innenkonus kleiner oder gleich dem der Hohlwelle ist, kann auf dem Flansch ein Gewinde für die Spannringe zum Einspannen der Schneidwerkzeuge auf der Hohlwelle eingeschnitten sein.

Die Ausbildung des quaderförmigen Gestelles als ein Leichtmetallgußstück verringert das Gesamtgewicht der gesamten Vorrichtung, so daß diese auch insgesamt als geschlossene Einheit leicht transportiert werden kann.

Ein Ausführungsbeispiel der Erfindung ist in den Zeichnungen dargestellt und wird im folgenden näher beschrieben. Es zeigen

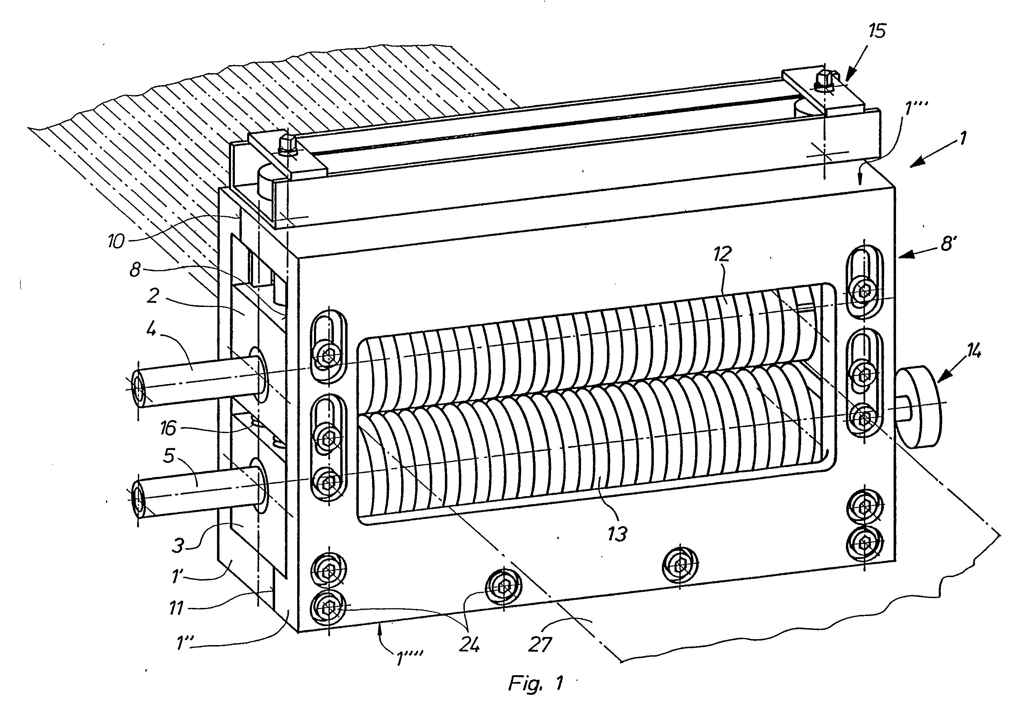

Figur 1 eine perspektivische Ansicht der Vorrichtung,

Figur 2 eine schematische Seitenansicht der Vorrichtung,

Figur 3 einen schematischen Längsschnitt der Vorrichtung entlang der Linie A-A in der Figur 2 mit einem geschnittenen Lager,

Figur 4 eine Einzelheit B aus der Figur 3.

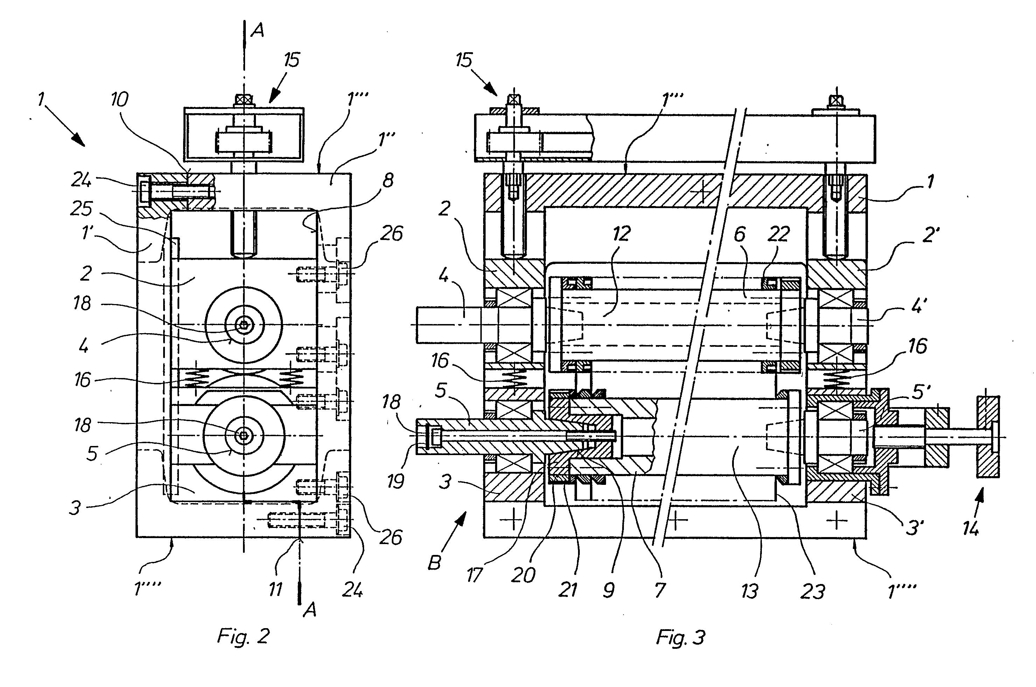

Die in den Figuren dargestellte Vorrichtung zur Aufnahme von kreisförmigen Schneidwerkzeugen besteht aus einem quaderförmigen Gestell 1 mit geschlossenen Ober-und Unterseiten 1''', 1''''. Die restlichen Seitenwände weisen Ausnehmungen auf: In den gegenüberliegenden, kleineren Seitenwänden nehmen die rechteckigen Ausnehmungen 8,8' jeweils Lagergehäuse 2,2' und 3,3' auf, in denen die Wellenzapfen 4,4',5,5' der Messerwellen 12,13 gelagert sind. Zur Führung der Lagergehäuse 2,2',3,3' können Führungsleisten 25 und Paßschrauben 26 verwendet werden (Fig.2). Durch die Ausnehmungen der Breitseiten tritt die flächige Bahn (27) ein bzw. die einzelnen Streifen aus.

Das Gehäuse ist in Längsrichtung entlang der Trennlinien 10 und 11 geteilt und wird mit Schrauben 24 zusammengeflanscht. Die Trennlinien 10 und 11 können auch in der Ober-und Unterseite 1''',1'''' anders gelegt werden, jedoch vornehmlich so, daß jeweils gleichartige Hälften 1',1'' entstehen (Fig.2).

Die radiale Verstellung der beiden Messerwellen 12,13 zueinander ist aus den Figuren 2 und 3 ersichtlich. Während die unteren Lagergehäuse 3,3' der Messerwelle 13 in den Ausnehmungen 8,8' starr gelagert sind, können die oberen Lagergehäuse 2,2' der Welle 12 über eine gleichmäßig auf die Lagergehäuse 2,2' wirkende, nicht näher beschriebene Verstellvorrichtung 15 entgegen der Kraft der Druckfedern 16,16' zwischen den Lagergehäusen (2,2' und 3,3') verschoben werden.

Zur axialen Verstellung der unteren Messerwelle 13 ist an dieser eine nicht näher beschriebene Verstellvorrichtung 14 seitlich angeflanscht.

Zum Ausbau der Lagergehäuse 2,2',3,3' wird das gesamte Gestell 1 auf eine Breitseite gekippt, und nach dem Lösen der Schrauben 24 und gegebenenfalls 26 sind die Lagergehäuse 2,2',3,3' ohne

weiteres entnehmbar. Es ist selbstverständlich, daß die radiale Verstellvorrichtung 15 dabei so weit zurückgestellt wurde, daß die Druckfedern 16,16' zwischen den Lagergehäusen entlastet sind.

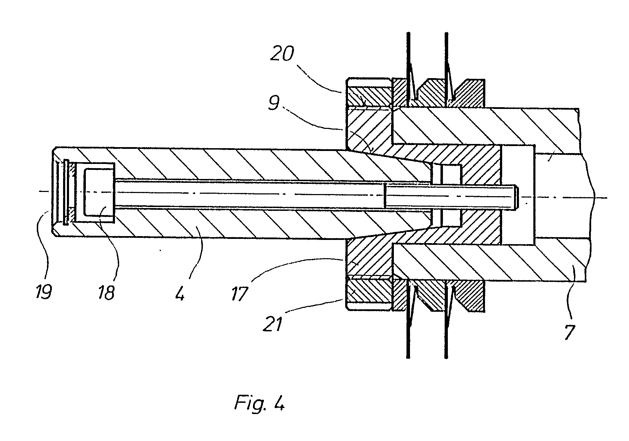

Aus der Figur 4 ist die Verbindung der in den Lagergehäusen 2,2',3,3' gelagerten Wellenzapfen 4,4',5,5' mit den Hohlwellen 6,7 der Messerwellen 12,13 ersichtlich. Auf die Stirnseite der Hohlwelle 7 ist ein Flansch 17 aufgeschraubt, der in seinem Inneren den Konus 9 aufweist. In eine zentrale Gewindebohrung des Flansches 17 greift eine durch den Wellenzapfen 4 reichende Spannschraube 8 und fixiert die Konusverbindung. Diese Verbindung kann leicht gelöst werden, weil sich beim Lösen der Schraube 18 der Schraubenkopf an dem Verschlußring 19 abstützt und die Schraube 18 nun als Druckschraube dient.

Auf das Gewinde 20 auf der Außenfläche des Flansches 17 ist ein Spannring 21 zum Zusammenpressen der Schneidwerkzeuge 22/23 aufgeschraubt.

**Ansprüche**

1) Vorrichtung zur Aufnahme von scherenartig zusammenwirkenden, kreisförmigen Schneidwerkzeugen, die paarweise auf zwei zueinander parallelen, drehbar gelagerten, axial zueinander verstellbaren und in einem Rahmen gelagerten Hohlwellen angeordnet sind, zum Trennen von dünnen, flächigen Bahnen, insbesondere von Metall-oder Kunststoff-Folien, Papier und dgl., in nebeneinanderliegende Streifen, dadurch gekennzeichnet,
daß der Rahmen aus einem quaderförmigen, in Längsrichtung entlang von Trennlinien (10,11) in zwei Hälften (1',1") zerlegbaren Gestell (1) besteht,
daß in rechteckigen Ausnehmungen (8,8') der beiden Seitenwände des quaderförmigen Gestelles - (1) Lagergehäuse (2,2', 3,3') für die an ihren Enden Wellenzapfen (4,4',5,5') aufweisenden Hohlwellen - (6,7) jeweils gemeinsam radial und axial gegeneinander verschiebbar gelagert sind,
daß die Hohlwellen (6,7) an beiden Enden einen Innenkonus (9) zur Aufnahme der Wellenzapfen - (4,4',5,5') aufweisen.

2) Vorrichtung nach Anspruch 1, dadurch gekennzeichnet, daß das quaderförmige Gestell (1) eine geschlossene Ober-und Unterseite (1''',1'''') aufweist.

3) Vorrichtung nach Anspruch 2, dadurch gekennzeichnet daß die Trennlinien (10,11) in der Ober-und Unterseite (1''', 1'''') des Gestelles (1) verlaufen.

4) Vorrichtung nach einem der Ansprüche 1 bis 3, dadurch gekennzeichnet, daß die Trennlinien - (10,11) so verlaufen, daß zwei symmetrische Gestellhälften (1',1") entstehen.

5) Vorrichtung nach Anspruch 4, dadurch gekennzeichnet, daß die Trennlinien (10,11) in der Ober-und Unterseite (1''', 1'''') in verschiedenen Ebenen verlaufen.

6) Vorrichtung nach einem der Ansprüche 1 bis 5, dadurch gekennzeichnet, daß die untere Messerwelle (13) in axialer Richtung, die obere Messerwelle (12) in radialer Richtung verstellbar ist.

7) Vorrichtung nach Anspruch 6, dadurch gekennzeichnet, daß die obere Messerwelle (12) in Richtung auf die untere Messerwelle (13) entgegen einer auf die Lagergehäuse (2,2') einwirkenden Federkraft verstellbar ist.

8) Vorrichtung nach Anspruch 7, dadurch gekennzeichnet, daß zwischen den Lagergehäusen (2,2',3,3') Druckfedern (16,16') angeordnet sind.

9) Vorrichtung nach Anspruch 8, dadurch gekennzeichnet, daß die Lagergehäuse (2,2') der oberen Messerwelle (12) mittels einer gleichmäßig auf beide Lagergehäuse (2,2') einwirkenden Verstellvorrichtung (15) bewegt werden.

10) Vorrichtung nach einem der vorhergenden Ansprüche, dadurch gekennzeichnet, daß der Innenkonus (9) zur Aufnahme der Wellenzapfen (4,4',5,5') in einem Flansch (17) ist, der in die Hohlwellen (6,7) eingesetzt und an deren (6,7) Stirnseiten lösbar festgeschraubt ist.

11) Vorrichtung nach Anspruch 10, dadurch gekennzeichnet, daß die Wellenzapfen (4,4',5,5') eine Durchgangsbohrung für eine Spannschraube (18) zum Verspannen des Innenkonus (9) mit den Wellenzapfen aufweisen.

12) Vorrichtung nach Anspruch 11, dadurch gekennzeichnet, daß der Kopf der Spannschraube - (18) in den Wellenzapfen (4,4',5,5') in einer Bohrung versenkt ist und diese Bohrung mit einem Verschlußring (19) teilweise verschlossen ist.

13) Vorrichtung nach Anspruch 12, dadurch gekennzeichnet, daß der Außendurchmesser des Flansches (17) kleiner oder gleich dem der Hohlwellen (6,7) ist und ein Gewinde (20) für Spannringe (21) zum Einspannen der Schneidwerkzeuge (22,23) trägt.

14) Vorrichtung nach einem der vorhergehenden Ansprüchen, dadurch gekennzeichnet, daß das quaderförmige Gestell (1) ein Leichtmetallgußstück ist.

Fig. 1

Fig. 2

Fig. 3

0 234 559

*Fig. 4*

0 234 559